# EUROPEAN PATENT APPLICATION

(11) **EP 4 063 911 A1**
(43) Date of publication of application: **28.09.2022**
(21) Application number: 21184188.7
(22) Date of filing: 07.07.2021
(51) Int. Cl.: G01S 13/66, G01S 13/86, G01S 13/931, G01S 15/66, G01S 15/86, G01S 15/931, G01S 17/66, G01S 17/86, G01S 17/931, G06K 9/00

(54) **METHOD OF MODELLING THE UNCERTAINTY OF SENSORS IN A CENTRAL-LEVEL TRACKING ARCHITECTURE**

(30) Priority: 24.03.2021 EP 21164726
(71) Applicant: Continental Autonomous Mobility Germany GmbH, 85057 Ingolstadt (DE)
(72) Inventor: Bazzana, Piergiovanni, 90411 Nürnberg (DE)
(74) Representative: Continental Corporation

(57) **Abstract**

This patent relates to a method of modelling the uncertainty of sensors in a central-level tracking architecture system for fusing a plurality of the sensor detections in respect to at least one sensor object. The detections acquired from the sensors correspond to at least one dimension of the at least one sensor object. For each sensor it is set a predetermined association gate minimum threshold for each dimension by setting a predetermined amount of sensor detection error for each dimension based on which an increase of each sensor detection error is modeled as a function of distance. An association gate is computed by increasing according to the modeling each sensor detection error above the predetermined association gate minimum threshold. A covariance matrix is computed for each sensor associated to each detection. At the end, a plurality of covariance matrices corresponding to all sensors is stored and made available to the central-level tracking system for fusing the plurality of sensor detections.

## Description

### Field of the invention

The invention is related to fusing detections from different types of sensors in a multiple sensor tracking system. In particular the invention is related to modelling the uncertainty of the sensors in a central-level tracking system architecture.

### Terms used in this invention

Measurement, alternatively called detection, or sensor detection = data corresponding to the value received in the current observation sequence from a sensor in a multiple sensor tracking system.

Sensor object, alternatively called target object = object from real life sensed by one or more sensors.

Fused object = sensor object whose fusion of the measurements took place in an immediately previous observation sequence.

Target position for each sensor object = estimated position of the respective sensor object in the current observation sequence.

### Background of the invention

It is known from prior art that fusing detections from different types of sensors in a multiple sensor tracking system has the advantage of a broader coverage of the sensor objects and a more accurate estimation of the future position of the target objects.

The target objects can be single target objects or multiple target objects.

In a central-level tracking architecture, all detections acquired from the sensors are being sent to a central tracking system that maintains corresponding tracks to each detection.

The theoretical advantage of the central-level tracking architecture is making best use of all the information contained in the detections.

One known problem of multi-sensor estimation is the so-called data association problem, that basically refers to knowing which already existing fused object should be associated with which new measurement coming from a specific sensor from the multiple sensors.

As pointed out in the Hugh Durrant-Whyte paper "Multi Sensor Data Fusion" [1]: "the many measurements made need to be correctly associated with the underlying states that are being observed. This is the data association problem. The data association problem includes issues of validating data (ensuring it is not erroneous or arising from clutter for example), associating the correct measurements to the correct states, (particularly in multi-target tracking problems) and initializing new tracks or states as required. Whereas conventional tracking is really concerned with uncertainty in measurement location, data association is concerned with uncertainty in measurement origin."

### Disadvantages of prior art

One of the known methods of dealing with sensor uncertainty is based on the "data driven modeling" of the sensor error, i.e., doing a measurement campaign, extracting data from the sensors and using fitting methods to determine the uncertainty.

This approach has two disadvantages: on one hand it is general more expensive, because collecting data over the field of view of the sensors requires special drive and measure sessions and on the other hand it leads to a map of uncertainty that requires high memory to be stored which is a problem for the embedded systems as it slows their performance.

Other approach known in literature is using directly the information provided by the sensors. This approach can be applied only when the sensors provide the full statistical information related to data they deliver. This is normally not the case in real world when the sensor manufacturer does not provide this type of information, which is another disadvantage.

### Problem solved by the invention

The problem to be solved by the invention is to model more accurately the sensor uncertainty in a central-level tracking architecture system, that is to define faster and less expensive the association gate for different sensors in order to improve the tracking performance and to define better the association gate for different sensors. The purpose of the invention is to give the decision maker a better tool for the description of the measurement errors from the sensors that serve to the fusion of the sensor detections.

### Summary of the invention

In order to solve the problem, the inventor conceived in a first aspect of the invention a computer-implemented method of modelling the uncertainty of sensors in a central-level tracking architecture system for fusing a plurality of sensor detections in respect to at least one sensor object, each of the at least one sensor object placed at a respective distance from each respective sensor, and the distance calculated on main axis of each respective sensor, the method comprising the following steps to be carried out in a current observation sequence:
S1.1. acquiring for each sensor the sensor detections of the at least one sensor object and storing them, each sensor detection corresponding to at least one dimension of the at least one sensor object, and each sensor detection including a respective sensor detection error,
S1.2. setting for each sensor a predetermined association gate minimum threshold for each dimension by setting for each sensor a predetermined amount of sensor detection error for each dimension,
S1.3. modeling for each sensor an increase of each sensor detection error using the predetermined amount of sensor detection error as a function of the distance,
S1.4. computing for each sensor an association gate for each sensor detection corresponding to each dimension by increasing according to the modeling the respective sensor detection error above the predetermined association gate minimum threshold,
S1.5 computing for each sensor a covariance matrix associated to each sensor detection by using scaling methods,
S1.6 storing a plurality of covariance matrices corresponding to all sensors and making the plurality of covariance matrices available to the central-level tracking system for fusing the plurality of sensor detections of the current observation sequence to at least one fused object of an immediately previous observation sequence, each of the at least one fused object corresponding to each of the least one sensor object.

Each covariance matrix represents the shape of the uncertainty of the corresponding sensor corresponding to each dimension.

In a second aspect of the invention, it is provided a data processing hardware having at least one computer processing unit core and comprising at least one volatile memory RAM and at least one non-volatile memory ROM characterized in that it is configured to carry out the computer-implemented method of modelling the uncertainty of the sensors according to any preferred embodiment.

In a third aspect of the invention, it is provided a computer program comprising instructions which, when the program is executed by the data processing hardware, causes the data processing hardware to carry out the steps of the computer-implemented method according to any preferred embodiment.

### Advantages of the invention

The main advantages of this invention are the following:
The method of the invention allows a faster and less expensive estimation of the uncertainty of the measurements provided by the sensors as compared with the state of art. The improved estimation of the uncertainty gives the decision maker more tools to improve the correction of the errors from the sensors and to better exploit the features of each sensor in the fusion.

The method of the invention is robust allowing to easily fit into the embedded systems without requiring high memory or high processing power and without requiring the full statistical information from the sensor manufacturers.

The method of the invention can be used in any technical field where the sensor objects are in move and at least one of the different types of sensors senses the motion of the sensor objects. For example, the method can be used in the automotive industry or in the earth moving industry or in the construction industry.

### Brief description of the drawings

Fig.1 depicts the principle of computing association gate using representation in polar coordinates; for the ease of understanding of the invention it is represented in two dimensions: the position of at least one fused object FOk in a plane.
Fig 2 depicts the principle of computing association gate using representation in cartesian coordinates; for the ease of understanding of the invention it is represented in two dimensions: the position of the at least one fused object FOk in the plane.
Figs. 3A and 3B illustrate the principles of the creation of the association gates for one radar and one camera of the vehicle, using representation in cartesian coordinates.
Fig. 4 illustrates the matching ellipsoids of the covariance matrices for the cameras and radars; for the ease of understanding of the invention it is represented in two dimensions: the position of the at least one fused object FOk in the plane.

### Detailed description

The method according to the invention is used in a central-level tracking architecture system for fusing the sensor detections acquired from the sensors in respect to a single sensor object or to multiple sensor objects.

The method of the invention can be applied to any land vehicle provided with sensors; the land vehicle being referred to as an ego vehicle. The ego vehicle is for example: a passenger car, a truck, a trailer roll, a bus, a crane, an earth moving equipment, a tractor, a motorcycle, a bicycle, etc.

The ego vehicle can be autonomous or manned.

For the sake of simplicity, throughout the detailed description and example of realization whenever it is mentioned a single sensor object Oₖ placed at a distance dₖ from each respective sensor of the ego vehicle, the distance dₖ calculated on main axis of each respective sensor, each sensor detection corresponding to at least one dimension of the sensor object Oₖ, it shall be understood that the teaching disclosed for one single sensor object Oₖ shall apply *mutatis mutandis* for all sensor objects object Oₖ.

The method according to the invention requires using at least two sensors, as there is no fusing of sensor detections acquired from a single sensor.

For simplicity, throughout the specification, the term "sensors" refers to those sensors of the ego vehicle that were selected to provide of the sensor detections for the purpose of carrying out the method of the invention in any embodiment. The ego vehicle may be provided with other sensors that are of no relevance for this invention.

The sensor objects Oₖ of the invention are in move. The ego vehicle is typically in move, however it may temporarily stand still, such as when waiting at a traffic light.

Each sensor object Oₖ has its own specific shape depending on the technology, position of the object and sensor mounting position.

The sensors track the motion of each sensor object Oₖ and measure the at least one dimension for each sensor object Oₖ that is placed within the field of view FOV of each respective sensor. The method of the invention applies to those sensor objects Oₖ that are simultaneously placed in the field of view FOV of two or more sensors.

The measurements are carried out by the sensors according to the specifications of each sensors' respective manufacturer.

Irrespective of the application of the method, the measurements of the sensors are sent to one or various fusion units in a central-level tracking system architecture for sensor fusion.

The measurements of the sensors are acquired by a data processing hardware which carries out all the steps of the invention. The measurements of the sensors acquired are alternatively called "detections" or "sensor detections", meaning the data of the values acquired from the respective sensors, said data being then processed by the data processing hardware as disclosed in the steps of the method.

The method according to the invention comprises six steps. All steps are carried out by the data processing hardware in a current observation sequence.

It shall be understood that in an immediately previous observation sequence it was computed at least one fused object FOₖ corresponding to a particular sensor object Oₖ.

In the first step, the sensor detections from each sensor in respect to each sensor object Oₖ are acquired in the current observation sequence and stored, each of the sensor detection corresponding to the at least one dimension of the at least one sensor object Oₖ. Each sensor detection includes a respective sensor detection error.

In the second step, for each sensor it is set a predetermined association gate minimum threshold for each dimension by setting for each sensor a predetermined amount of sensor detection error for each dimension as a function of the distance dₖ.

In the third step, for each sensor it is modeled an increase of each sensor detection error using the predetermined amount of sensor detection error as a function of the distance dₖ.

The modelling of the uncertainty is carried out independently for each sensor and each sensor object Oₖ, which means that the parameters of the modelling can be:
in respect to the sensors:
   either the same parameters for all sensors, or
   different parameters for part or for all sensors,
in respect to the sensor objects Oₖ:
   either the same parameters for all sensor objects Oₖ, or
   different parameters for part or for all sensor objects Oₖ.

Modeling of the uncertainty is done by using the information provided by the sensor manufacturer, deducting from it the standard deviations to be used in sensor error description.

Then, in the fourth step, for each sensor an association gate is computed for each sensor detection corresponding to each dimension by increasing according to the modeling the respective sensor detection error above the predetermined association gate minimum threshold.

The upper limit of the increase is defined by the limits of measurement of each sensor as mentioned in the corresponding technical specification.

The association gate, alternatively called validation gate, is an observation area around each sensor detection of the current observation sequence and the at least one fused object FOₖ of the immediately previous observation sequence. Each sensor detection represents the target position of the corresponding sensor object Oₖ.

The size of the gate is set based on the evaluation of the probability of false association versus probability of missing association using a criterion available in literature, namely the usage of χ² distribution. The size of the gate, although indirectly and through the rest of the fusion algorithmics, is highly influenced by the size and shape of the sensor error modeled in steps two and three.

As well known in the literature the model of the sensor uncertainty is fundamental to allow the best usage of measurements.

As an extreme example, consider the case of fusing detections from two sensors, one being very precise in measuring positions in X direction and very poor in measuring positions in Y direction, and a second having the opposite property, i.e. very precise in Y direction and very poor in X direction. Assuming that the fusion method used is the Kalman filter (see for ex. https://en.wikipedia.org/wiki/Kalman_filter), and based on the related equations that are here assumed to be known, the resulting estimated position will mostly use the X position of the first sensor and the Y position of the second. In order to get this result from the fusion algorithm, and not restricted to the Kalman filter case, it is fundamental to provide the correct description of the measurements errors to the fusion algorithm. Moreover, the same description influences the association gate definition due to the fact that higher precision values from the sensor imply more strict association criteria and lower precision imply weaker association criteria. This is reflected in the above fifth step when the χ² distribution is used.

In the fifth step, a covariance matrix is computed for each sensor associated to each of the sensor detection by using scaling methods.

The covariance matrix is the computable function of each dimension depending on the distance dₖ in the field of view FOV of the sensor, and by scaling, of the respective association gate. The scaling can be carried out by various formulas, a non-limiting example being by linear interpolation over distance and angles.

The covariance matrix represents the shape of the uncertainty of the corresponding sensor corresponding to each dimension.

In the sixth step, a plurality of covariance matrices is stored corresponding to all the sensors and made available to the central-level tracking system for fusing the plurality of sensor detections of the current observation sequence to at least one fused object FOₖ of the immediately previous observation sequence, each of the at least one fused object FOₖ corresponding to each of the least one sensor object Oₖ.

An overlap of the association gate or, respectively association gates of the fused object in the immediately previous observation sequence and each sensor detection of the current observation sequence is seen as an indication that the respective sensor detection may be validated in order to be fused to one or more fused objects FOₖ. The rules for validation and fusing the sensor detections are outside the scope of this invention, as the invention only provides a better tool for determining the uncertainty of the sensor detections.

The method of the invention as disclosed has the advantage that it is a simple although quantitative, faster and less expensive method for estimation of the uncertainty of the measurements provided by the sensors as compared with the state of art, because the covariance matrices outputted by the method, as mathematical expression of the uncertainty, rely on theory and on the data available in sensor documents from the sensors' manufacturers thus the time to perform calculations is shorter than in the prior art and, on the other hand do not require long, complex and expensive measurement campaign of the sensors accuracy, they and the method is less expensive than the methods of prior art.

The improved description of the uncertainty gives a decision maker more tools to improve the sensor's detection usage and to exploit faster and cheaper the features of each sensor in the fusion.

The method of the invention is robust allowing to easily fit into the embedded systems without requiring high memory or high processing power- because computing covariance matrices does not require high memory or high processing power. Moreover, by using the method of the invention, the full statistical information from the sensor manufacturers is no longer needed, because the reduced set of information provided in the sensors data sheet is normally adequate to compute the covariance matrices sufficient to give a description good enough for the purpose of sensor fusion, which makes the invention particularly advantageous for those sensors for which the sensor manufacturers do not provide full information regarding errors.

In a preferred embodiment the method further comprises a sub-step of the fifth step:
In the fifth step, each covariance matrix is represented graphically by a matching ellipsoid, proportionally to the size of the respective covariance matrix and proportionally to the size of the association gate corresponding to each dimension,

Each matching ellipsoid represents the shape of the uncertainty of the corresponding sensor corresponding to each dimension, the bigger size of the ellipsoid corresponding to a bigger degree of uncertainty of the respective sensor's detections.

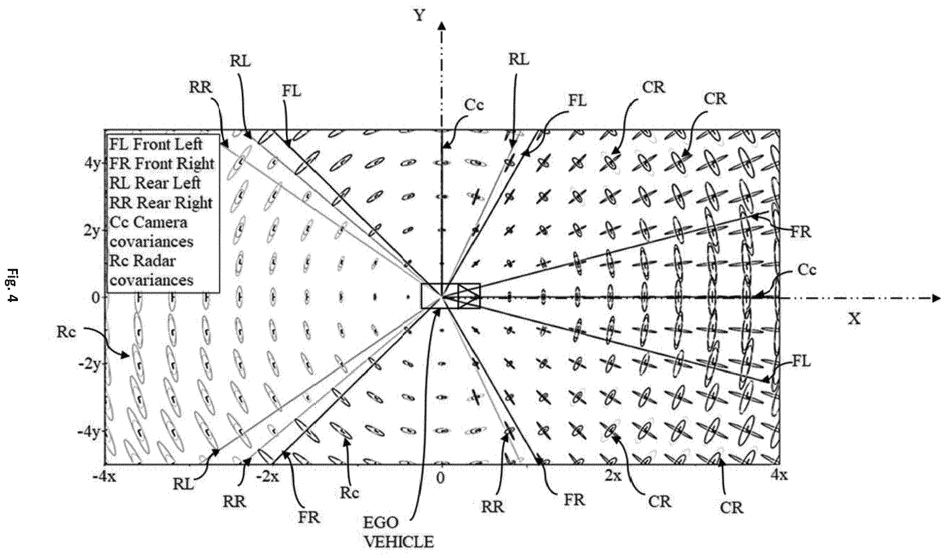

By representing graphically the plurality of covariance matrices as matching ellipsoids, the invention has a further advantage to enable the decision maker to have a graphical overall image of which sensors and/or which areas in the field of view FOV of the sensors need action by the decision maker in order to reduce the uncertainty. The example of realization and Fig. 4 shows schematically such an overall image.

The method of the invention with or without the graphical representation of the plurality of covariance matrices can be applied for a variable number of dimensions, among which three preferred embodiments are presented below:
In one preferred embodiment, there is only one dimension namely the position of the sensor object Oₖ. For the sake of simplicity of graphical representation, all the Figures depict the application of the method for the position of the sensor object Oₖ.

In another preferred embodiment, not represented graphically, there are two dimensions, namely the position and the relative velocity of the sensor object Oₖ in respect to the ego vehicle, referred to for simplicity as the velocity of the sensor object Oₖ

In another preferred embodiment, not represented graphically, there are three dimensions, namely the position, the velocity and the acceleration of the sensor object Oₖ.

The selection of type and number of dimensions takes into consideration the specific need to estimate the corresponding variable. For example, in case the ego vehicle is an earth moving equipment, knowing that this type of equipment moves very slowly as compared with a passenger car, it is not necessary to use the acceleration of the sensor object Oₖ, and, in some situations, it is not be necessary to use the velocity either.

On the contrary, if the ego vehicle is a road vehicle, particularly if there is a need to reduce the uncertainty of the sensors when the ego vehicle is moving above a certain speed, such as for example more than 60 km/h, it is convenient to select the position, the velocity and the acceleration of the sensor object Oₖ to be used in the method.

In a preferred embodiment, the sensors are of the same type: i.e., radar sensors; cameras; ultrasonic sensors; lidar sensors, etc.

In another preferred embodiment, the sensors are of two or more types: i.e., radar sensors and cameras; radar sensors and ultrasonic sensors; radar sensors and lidar sensors; cameras, radar sensors and ultrasonic sensors, etc.

The number and combination of the sensors' type is defined by the existing configuration of sensors on the ego vehicle and the selection of the sensors made by the decision maker.

In one example, not represented graphically, some ego vehicles are provided with a single type of sensors, such as cameras. In this case, part or all the cameras are used for the applying of the method of the invention.

In other example, not represented graphically, other ego vehicles are provided with three types of sensors: cameras, radar sensors and ultrasonic sensors.

In all the examples, the method can be applied for all the sensors of the vehicle or only for part of the sensors.

Using the method invention only for part of the sensors of the ego vehicle is useful when the decision maker knows that for example there is a need to reduce the uncertainty of the sensors that sense objects from a certain area in respect to the ego vehicle, such as for example the blind spot.

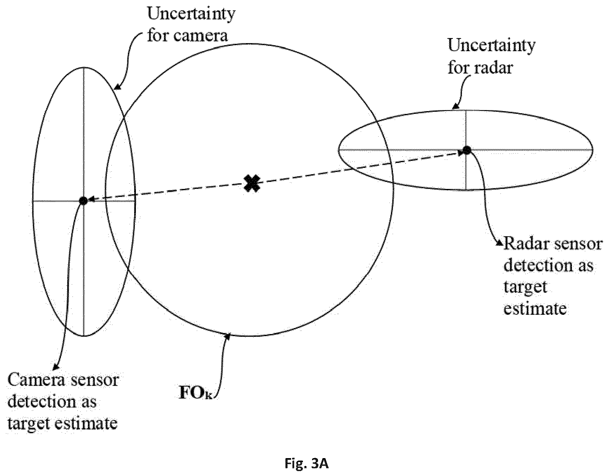

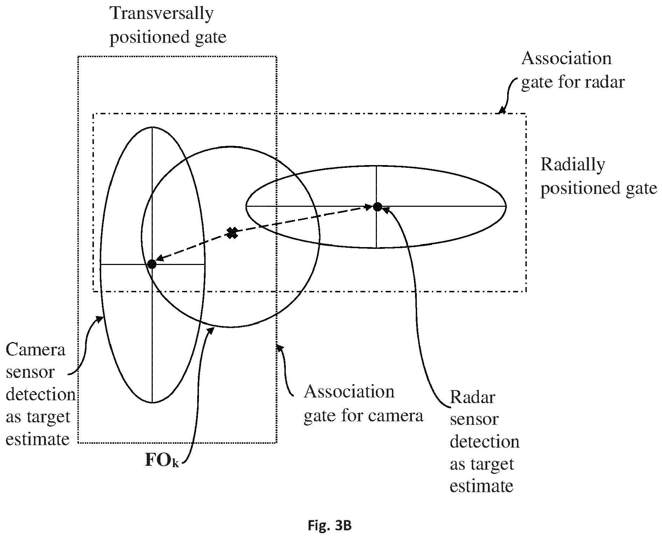

In another preferred embodiment, the sensor detections are acquired from at least one camera and from at least one radar. This embodiment will be illustrated in the example of realization and represented graphically in Figs. 3A, 3B and 4.

By allowing multiple combinations between the number and the type of sensors and the number and type of dimensions measured by each sensor the invention has the advantage to adapt to each particular need to reduce the uncertainty of the sensors of the ego vehicle and to the existing configuration of the sensors of the ego vehicle.

The method of the invention is independent from the reference system, that is polar or cartesian.

All the computations made in either step of the method according to any of the preferred embodiments can be carried out either in polar coordinates or in cartesian coordinates.

If needed, the outcome of either step of the method as well as the outcome of the method itself can be converted from polar coordinates to cartesian coordinates and vice-versa.

The choice between using the polar or the cartesian representation is a convenience choice depending on which reference system simplifies more the computation and which reference system is used in the fusion.

Example: assume the tracking system is designed to use cartesian reference system, whereas the uncertainty of measurements of radars are more easily described in polar coordinates, as global uncertainty is naturally split into radial and angular uncertainty. For this example, the main reference system is a cartesian reference system and the uncertainty of the measurements of radars is converted from polar to cartesian.

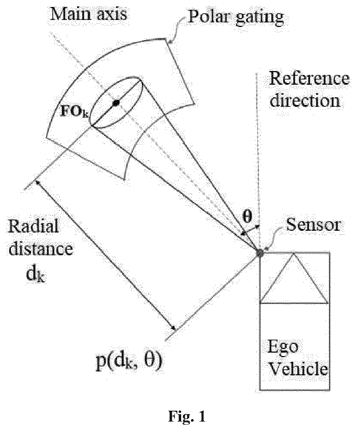

Fig. 1 schematically depicts the principles of computing of the association gate in polar coordinates for the embodiment when there is only one dimension, namely the position. It can be seen from Fig. 1 that the radial distance is the distance dₖ, and the azimuth is the angle θ between the main axis of the sensor and a reference direction of the respective sensor. Thus, the position *p* exemplified in Fig. 1 is written as *p* (*dₖ, θ*).

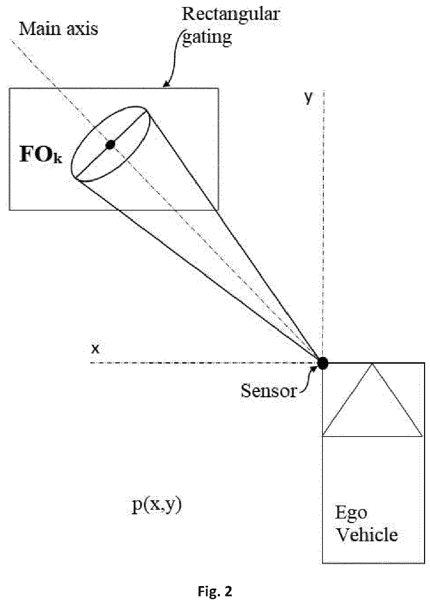

Fig. 2 schematically shows the same computing of the association gate in cartesian coordinates *x,y* for the same embodiment, where, for simplicity, the reference direction is the *y* axis. It can be seen from Fig. 2 that the position *p* is written as *p (x,y).*

In a second aspect of the invention, it is provided a data processing hardware having at least one computer processing unit core and comprising at least one volatile memory RAM and at least one non-volatile memory ROM characterized in that it is configured to carry out the computer-implemented method of modelling the uncertainty of the sensors according to any preferred embodiment.

The data processing hardware is, in a preferred embodiment, a separated processing unit from the sensor processing units, communicating with the sensor processing units by communication protocols.

In another preferred embodiment, the data processing hardware is included in one or more sensor processing units, carrying out apart from the method of the invention, the usual tasks of the sensor processor unit.

In a third aspect of the invention, it is provided a computer program comprising instructions which, when the program is executed by the data processing hardware, causes the data processing hardware to carry out the steps of the computer-implemented method according to according to any preferred embodiment.

### Example of realization

With reference to Figs 3A, 3B and 4, in the example of realization it is presented schematically the preferred embodiment using sensors of two type: radars and cameras.

For the ease of understanding, a single fused object FOₖ is depicted corresponding to a single sensor object Oₖ, and only the position *p(x,y)* of the sensor object Oₖ is represented.

Figs. 3A and 3B illustrate the principles of the creation of the association gates for one radar and one camera of the ego vehicle.

In Fig. 3A it is represented schematically the situation after having acquired the sensor detections from the radar and from the camera. Each ellipse describes a region where the fused object FOₖ could actually be the sensor object Oₖ with a confidence of about 68%, given the received measurement.

The fused object FOₖ of the immediately previous observation sequence is also schematically represented. The question is whether the two sensor detections of the current observation sequence are to be fused or not to the fused object FOₖ.

In Fig. 3B it is represented schematically the result of increase of the association gates for both sensors, the association gates represented as two rectangles. Fig. 3B also illustrates the representation of the matching ellipsoids for the two covariance matrices: one covariance matrix for the radar and the other one for the camera.

Typically, the increase of the radially positioned association gate- in this case the association gate for the radar, is more significant in length than in width. And likewise, typically, the increase of the transversally positioned association gate- in this case the association gate of the camera, is more significant in width than in length.

An overlap of the association gates with the fused object FOₖ is seen as an indication that the sensor detections of the current observation sequence are to be validated and fused to the fused object FOₖ.

The overlap is evaluated using the formulas for computing distance measure between distributions, such as Mahalanobis distance or Kullback-Leibler divergence.

Based on the principles illustrated in Figs 3A and 3B, in Fig. 4 it is depicted an example where the ego vehicle is a passenger car or a bus having four side radars mounted in the front right angle, front left angle, rear right angle, and rear left angle, where left and right are considered in respect to the direction of movement towards the positive side of the axis x, and three cameras one facing forward and two laterals: lateral left and lateral right.

The limits of the fields of view FOV of the radar sensors are also indicated in Fig. 4 with FR, FL, RR, RL, whereas the limits of the FOV of the cameras is indicated in Fig. 4 with C.

Fig. 4 illustrates the matching ellipsoids of two types of covariance matrices:
covariance matrices CR for the camera and the front left, respectively front right radar, the two ellipsoids being perpendicular to one another,
for all the other parts of the fields of view FOV the ego vehicle radar covariances Rc for two radars or camera covariances Cc for two cameras, the two ellipsoids being one inside the other.

It can be seen from Fig.4 how the uncertainty of the of the sensors in general increases when the distance and the angle increase. The exact manner how this happens is related to the characteristics of the specific sensor, which are described by the sensor documentation, and reflected in the coefficients of the covariance matrices.

While the description of the method and the system was disclosed in detail in connection to preferred embodiments, those skilled in the art will appreciate that various modifications and alterations of the present invention will be apparent to those skilled in the art without departing from the essential scope to the teaching of the invention and without diminishing its advantages. It is therefore intended that such modifications and alterations be covered by the appended claims.

### REFERENCE SIGNS

ego vehicle
fused object FOₖ
distance dₖ
radial distance dₖ and azimuth θ- polar coordinates of the fused object FOₖ
position *p*
x, y - cartesian coordinates of the fused object FOₖ
FL limits of the field of view FOV of the front left radar
FR limits of the field of view FOV of the front right radar
RL limits of the field of view FOV of the rear left radar
RR limits of the field of view FOV of the rear right radar
C limits of the field of view FOV of the camera facing forwards
Rc radar-radar covariances
Cc camera-camera covariances
CR camera-radar covariances

## Claims

1. Computer-implemented method of modelling the uncertainty of sensors in a central-level tracking architecture system for fusing a plurality of sensor detections in respect to at least one sensor object (Oₖ), each of the at least one sensor object (Oₖ) placed at a respective distance (dₖ) from each respective sensor, and the distance (dₖ) calculated on main axis of each respective sensor, **characterized in that** the method comprises the following steps to be carried out in a current observation sequence:
S1.1. acquiring for each sensor the sensor detections of the at least one sensor object (Oₖ) and storing them, each sensor detection corresponding to at least one dimension of the at least one sensor object (Oₖ), and each sensor detection including a respective sensor detection error,
S1.2. setting for each sensor a predetermined association gate minimum threshold for each dimension by setting for each sensor a predetermined amount of sensor detection error for each dimension,
S1.3. modeling for each sensor an increase of each sensor detection error using the predetermined amount of sensor detection error as a function of the distance (dₖ),
S1.4. computing for each sensor an association gate for each sensor detection corresponding to each dimension by increasing according to the modeling the respective sensor detection error above the predetermined association gate minimum threshold,
S1.5 computing for each sensor a covariance matrix associated to each sensor detection by using scaling methods,
S1.6 storing a plurality of covariance matrices corresponding to all sensors and making the plurality of covariance matrices available to the central-level tracking system for fusing the plurality of sensor detections of the current observation sequence to at least one fused object (FOₖ) of an immediately previous observation sequence, each of the at least one fused object (FOₖ) corresponding to each of the least one sensor object (Oₖ).
wherein each covariance matrix represents the shape of the uncertainty of the corresponding sensor corresponding to each dimension.

2. The method of claim 1, wherein the method further comprises the following steps:
S2.5. representing graphically a matching ellipsoid for each covariance matrix, proportionally to the size of the respective covariance matrix and proportionally to the size of the association gate corresponding to each dimension,

3. The method of claim 1 or 2, wherein the method is carried out in respect to one dimension that is the position of the at least one sensor object (Oₖ).

4. The method of claim 3, wherein the method is carried out in respect to an additional dimension: the velocity of the at least one sensor object (Oₖ).

5. The method of claim 4, wherein the method is carried out in respect to an additional dimension: the acceleration of the at least one sensor object. (Oₖ)

6. The method of any of the claims 1 to 5, wherein the measuring of the at least one dimension is carried out by acquiring sensor detections from sensors of the same type.

7. The method of any of the claims 1 to 5, wherein the measuring of the at least one dimension is carried out by acquiring sensor detections from sensors of different types.

8. The method of claim 7, wherein the sensor detections are acquired from at least one camera and from at least one radar.

9. The method of any of the claims 1 to 8, wherein the representation of one or more steps of the invention is carried out either in polar coordinates or in cartesian coordinates and wherein it is possible to convert the outcome of each respective step from polar coordinates to cartesian coordinates or respectively from cartesian coordinates to polar coordinates.

10. A data processing hardware having at least one computer processing unit core and comprising at least one volatile memory RAM and at least one non-volatile memory ROM, **characterized in that** it is configured to carry out the computer-implemented method of modelling the uncertainty of the sensors according to any claim from 1 to 9.

11. The data processing hardware of claim 10 wherein the data processing hardware is a separated processing unit from the sensor processing units, communicating with the sensor processing units by communication protocols.

12. The data processing hardware of claim 10 wherein the data processing hardware is included in one or more sensor processing units.

13. Computer program **characterized in that** it comprises instructions which, when the program is executed by the data processing hardware according to any of the claims 10 to 12, causes the data processing hardware to carry out the steps of the computer-implemented method according to any of the claims 1 to 9.
